# EUROPEAN PATENT APPLICATION

(11) **EP 2 511 858 A2**
(43) Date of publication of application: **17.10.2012**
(21) Application number: 12250072.1
(22) Date of filing: 28.03.2012
(51) Int. Cl.: G06K 19/077, H01Q 1/00, H01Q 9/00

(54) **Ultra thin antenna**

(30) Priority: 30.03.2011 US 201161469162 P
(71) Applicant: Convergence Systems Limited, Hong Kong (CN)
(72) Inventor: Lai, Kin Yue Albert, Wanchai (HK); Chan, Yi Wah, Wanchai (HK); Yiu, Pik Chung, Wanchai (HK); Chan, Cheuk Kuen Kenny, Wanchai (HK); Chan, Wai Kin, Wanchai (HK); Yeung, Siu Hong, Wanchai (HK); Lam, Ka Shun, Wanchai (HK); Garrett, Jerry, Wanchai (HK)
(74) Representative: Ward, David Ian

(57) **Abstract**

An ultra thin antenna (100, 200) is disclosed as having a rectangular path (102, 202) and at least one extender piece (104, 108, 110, 212) for extension of radio frequency (RF) energy out of the rectangular path (102, 202).

## Description

This invention relates to an ultra thin antenma.

Ultra thin antennae for radio frequency identification (RFID) application are becoming popular. An ultra thin antenna can be put on a shelf, table, drawer, cabinet, or even container box, to track the item to which it is attached. Application market of ultra thin antennae includes government offices for document tracking, business offices for file tracking (e.g. the antennae being attached to ring binders or file folders), libraries for books and manual tracking, service depots for tool tracking, retail shops for goods tracking (real time inventory and data mining), jewelry shops for jewelry tracking (data mining and anti-theft), and so on.

One challenge of ultra thin antenna is how to distribute the energy to a large area. Another challenge is how to control the read zone to be an almost rectangular space on top of the antenna. Both of these have been difficult design requirements. The most recent development has been near field antenna, using the principle of time varying magnetic field. But this technology cannot be done easily with ultra thin antenna. In addition, the antenna surface area is restricted to resonant size, unless one cascades multiple antenna.

It is thus an object of the present invention to provide an ultra thin antenna in which the aforesaid shortcomings are at least mitigated, or at least to provide a useful alternative to the trade and public.

It is another object of the present invention to provide an ultra thin antenna with a configurable and large surface area for the antenna, and to provide a controlled rectangular box of read zone on top of it.

According to the present invention, there is provided an ultra thin antenna with a rectangular path and at least one extender piece for extension of radio frequency (RF) energy out of the rectangular path.

Embodiments of ultra thin antennae according the present invention will now be described, by way of examples only, with reference to the accompanying drawings, in which:

Figure 1 shows two ultra thin antennae (one of a larger size and the other one of a smaller size) according to the present invention;

Figures 2 and 3 are enlarged views of the larger size ultra thin antenna of Figure 1;

Figure 4 is another enlarged view of the larger size ultra thin antenna of Figure 1;

Figure 5 shows another arrangement of a flag shaped corner compensation piece of the ultra thin antennae of Figure 1;

Figure 6 is an enlarged view of the smaller size ultra thin antenna of Figure 1;

Figure 7 is a further enlarged view of the larger size ultra thin antenna of Figure 1;

Figure 8 is a yet further enlarged view of the larger size ultra thin antenna of Figure 1;

Figure 9 is another enlarged view of the smaller size ultra thin antenna of Figure 1;

Figure 10 is yet another enlarged view of the larger size ultra thin antenna of Figure 1;

Figure 11 is a further enlarged view of the smaller size ultra thin antenna of Figure 1;

Figure 12 is a still further enlarged view of the smaller size ultra thin antenna of Figure 1;

Figure 13 is another enlarged view of the smaller size ultra thin antenna of Figure 1; and

Figure 14 shows a further ultra thin antennae according to the present invention.

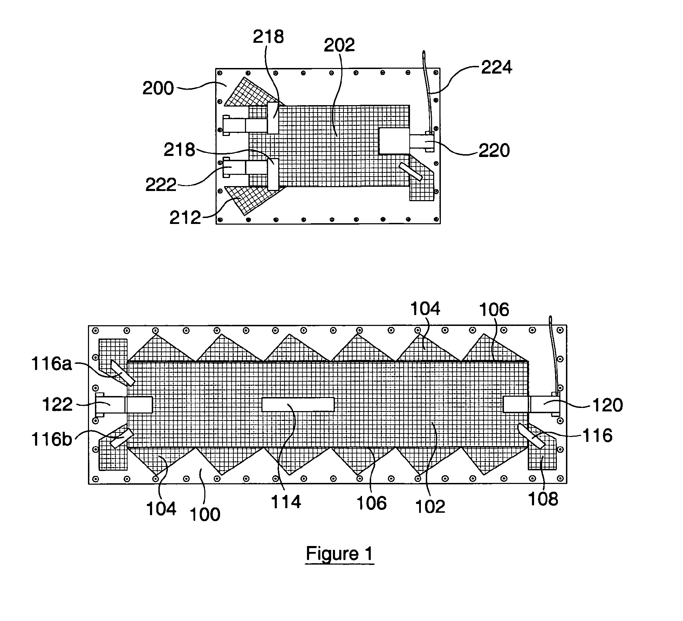

Figure 1 shows two ultra thin antennae according to the present invention, with one of a larger size, generally designated as 100, and the other one of a smaller size, generally designated as 200. Both the antennae 100, 200 are ultra thin antennae, each of a thickness of 10mm or below.

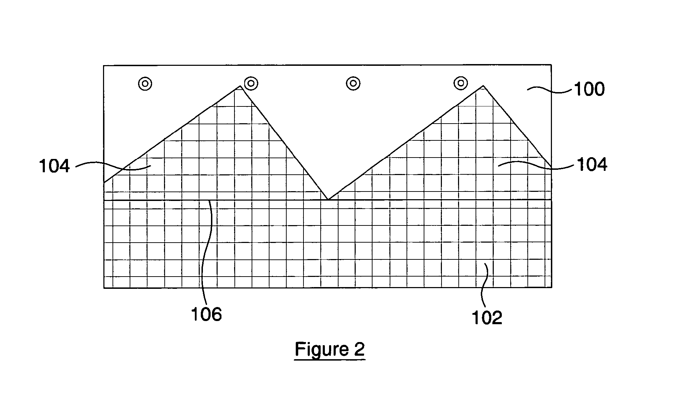

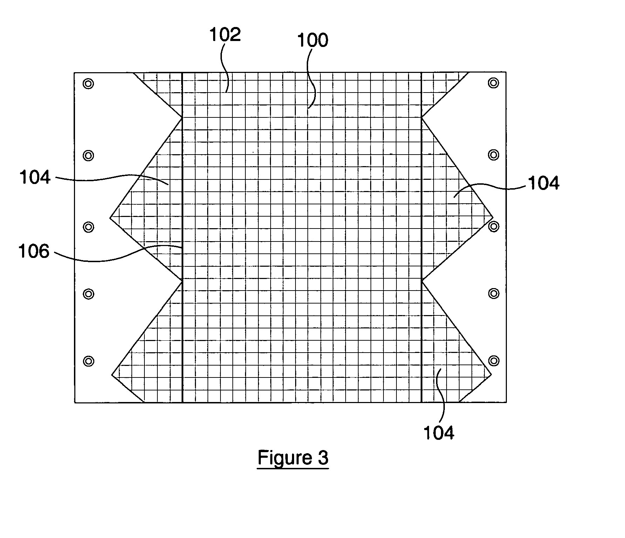

Referring to Figures 2 and 3, they are both enlarged views of the antenna 100. The antenna 100 has an original rectangular path 102, to which a number of triangular shaped wave extender pieces 104 are connected, for extension of radio frequency (RF) energy out in a continuous manner along two longer opposite sides 106 of the original rectangular path 102.

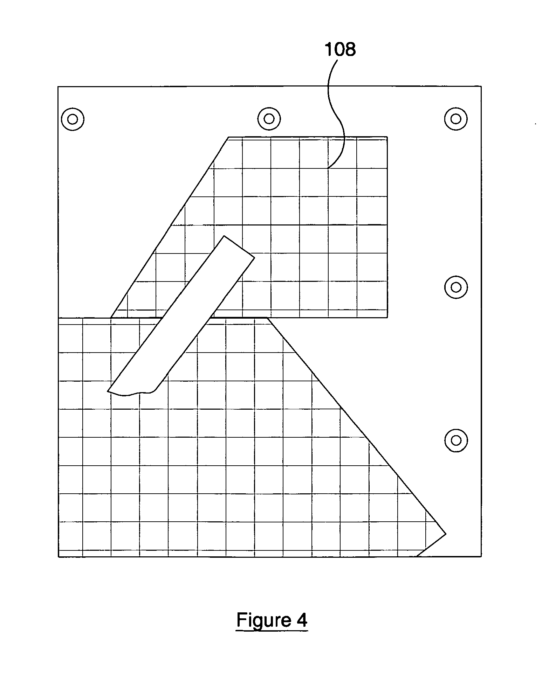

As shown in Figure 4, such shows that the antenna 100 is connected with a flag shaped corner compensation piece 108 for extension of RF energy out to corners of the original rectangular path 102 of the antenna 100.

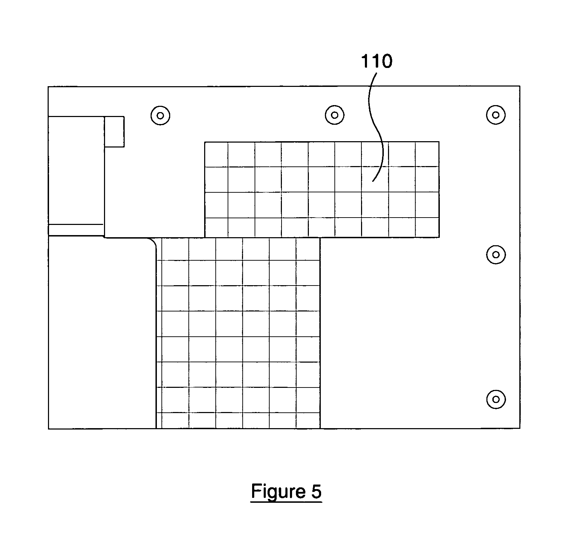

Figure 5 shows a rectangular corner compensation piece 110 which may be connected with the larger size ultra thin antenna 100 or the smaller size ultra thin antenna 200, for extension of RF energy out to corners of the original rectangular path 102, 202 of the respective antenna 100, 200.

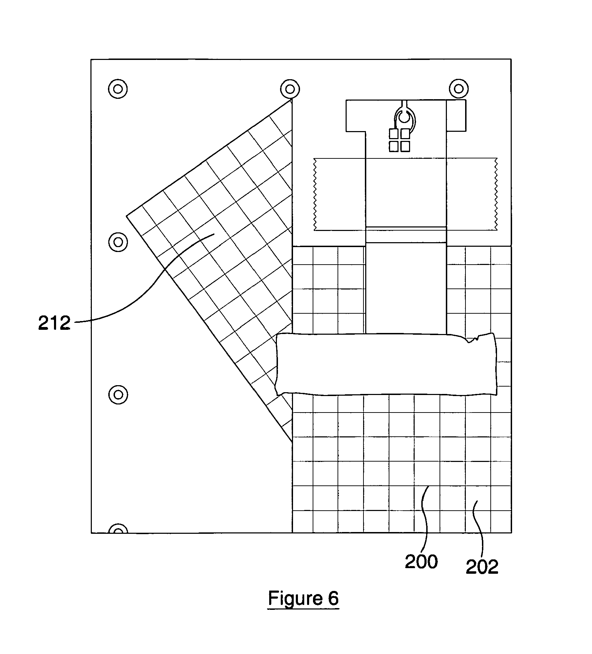

Turning now to Figure 6, such shows that the smaller size ultra thin antenna 200 is provided with a triangular corner compensation piece 212 for extension of RF energy out to corners of the original rectangular path 202 of the antenna 200.

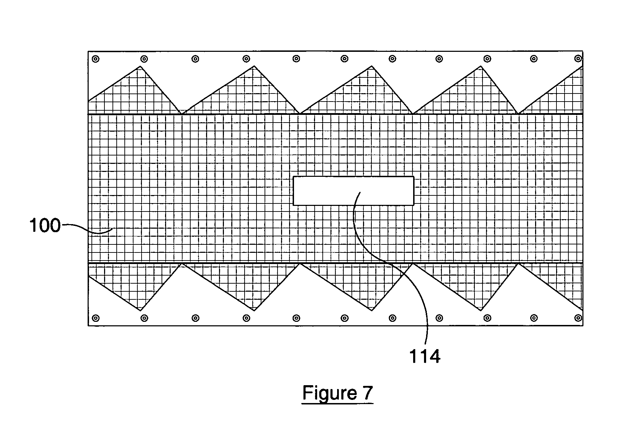

As shown in Figure 7, the antenna 100 is provided with a narrow rectangular metal sheet inline wave management tube 114 for guiding the wave along the main rectangular path 102.

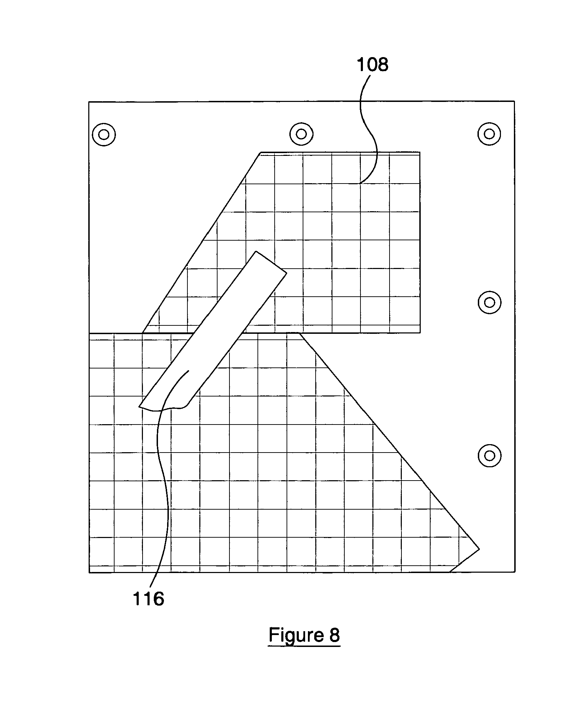

Turning now to Figure 8, such shows that the antenna 100 is provided with a narrow rectangular metal sheet corner wave management tube 116 which is attached to and spans across the original rectangular path 102 and the flag shaped corner compensation piece 108 for guiding the wave from the main original rectangular path 102 to the corner compensation piece 108. lt can be further seen in Figure 1 that other narrow rectangular metal sheet corner wave management tubes 116a, 116b are also provided, which are attached to and span across the original rectangular path 102 and other types of corner compensation pieces, again for guiding the wave from the main original rectangular path 102 to such various types of corner compensation pieces, e.g. flag shaped corner compensation pieces, rectangular corner compensation pieces, and triangular corner compensation pieces.

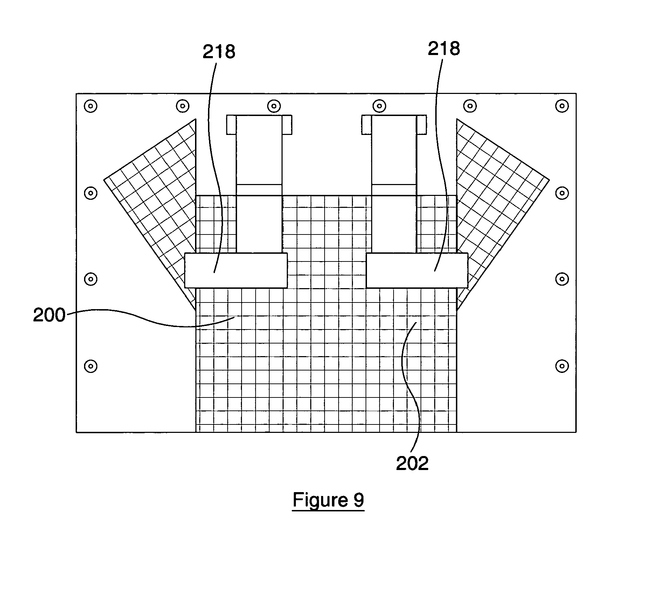

Figure 9 is an enlarged view of the smaller size ultra thin antenna 200, showing the provision of two narrow rectangular metal sheet inline wave blocking tubes 218 for blocking the wave along the main rectangular path 202 of the antenna 200.

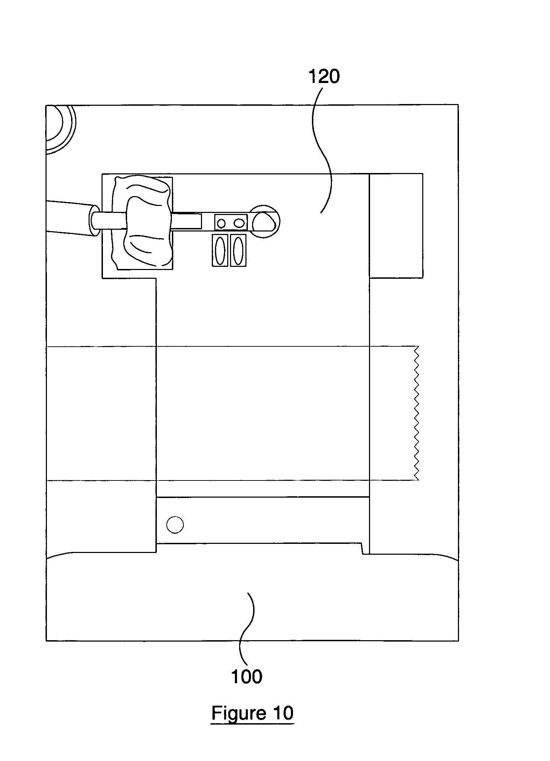

As shown in Figure 10, a matching circuit 120 is provided at the exciter end of the antenna 100 to match the antenna 100. However, the matching is not necessary for lowest reflection from the antenna 100. Similarly, and as shown in Figure 1, a matching circuit 220 is provided at the exciter end of the antenna 200 to match the antenna 200. Again, the matching is not necessary for lowest reflection from the antenna 200.

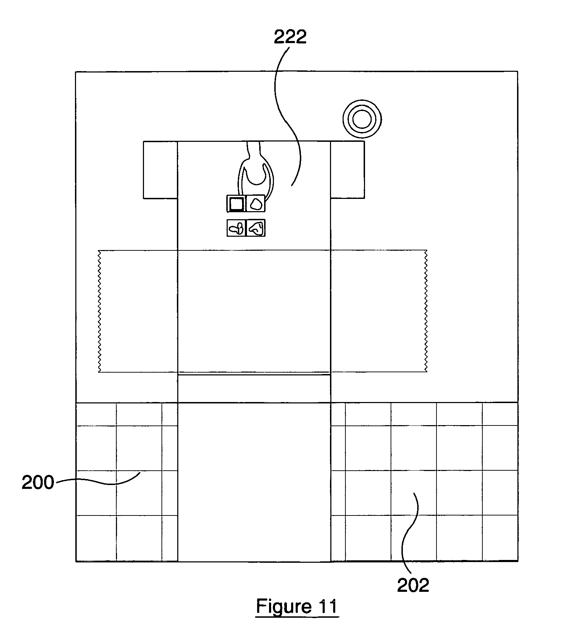

Turning to Figure 11, a matching circuit 222 is provided at the terminator end of the antenna 200 to match the termination. The matching is not necessary for lowest reflection from the antenna 200. Similarly, and as shown in Figure 1, a matching circuit 122 is provided at the terminator end of the antenna 100 to match the termination. Again, the matching is not necessary for lowest reflection from the antenna 100.

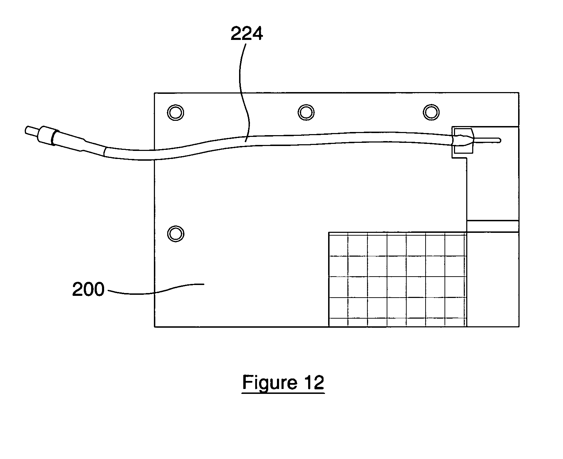

As shown in Figure 12, a pig tail RF cable 224 is connected to the exciter end of the antenna 200. This will provide a best low profile antenna design. Similarly, a pig tail RF cable is also connected to the exciter end of the antenna 100.

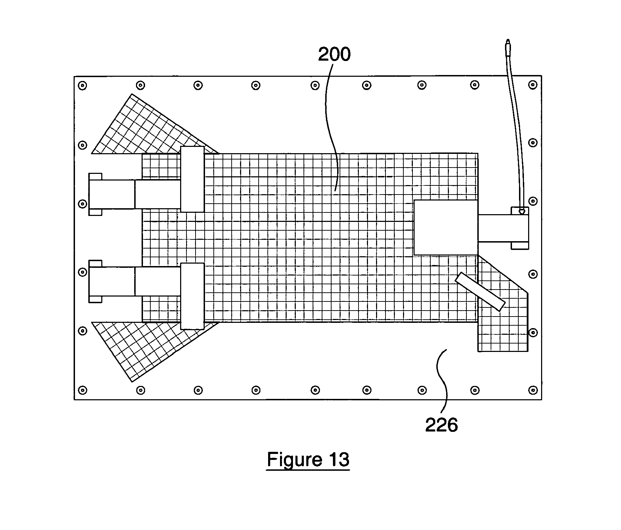

Turning to Figure 13, such shows that a ground plane 226 is provided below the antenna 200, with various optimal width, so as to improve the antenna performance.

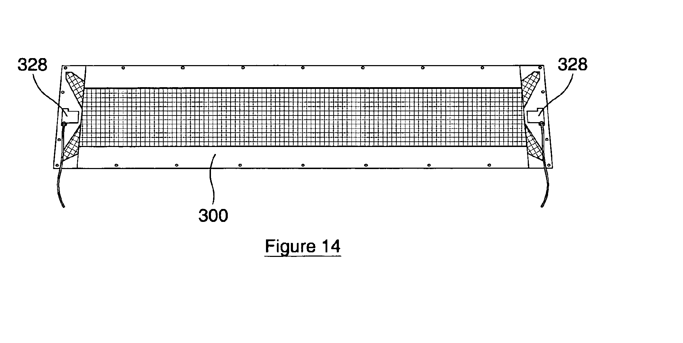

As to Figure 14, such shows a further ultra thin antenna 300 according to this invention, in which two RF inputs 328 are provided, one at one longitudinal end of the antenna 300, and the other at the opposite longitudinal end of the antenna, so as to improve the antenna performance.

It should be understood that the above only illustrates and describes examples whereby the present invention may be carried out, and that modifications and/or alterations may be made thereto without departing from the spirit of the invention.

It should also be understood that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. An ultra thin antenna with a rectangular path and piece for extension of radio frequency (RF) energy out of the rectangular path.

2. An antenna according to claim 1, wherein the extender piece is a triangular shaped wave extender piece for extension of RF frequency out in a continuous manner along two sides of the rectangular path.

3. An antenna according to claim 1 or 2, wherein the extender piece is a flag shaped corner compensation piece for extension of RF energy out to corners of the rectangular path.

4. An antenna according to any of the preceding claims, wherein the extender piece is a rectangular corner compensation piece for extension of RF energy out to corners of the rectangular path.

5. An antenna according to any of the preceding claims, wherein the extender piece is a triangular corner compensation piece for extension of RF energy out to corners of the rectangular path.

6. An antenna according to any of the preceding claims, further including a rectangular metal sheet inline wave management tube for guiding the wave along the main rectangular path.

7. An antenna according to any of the preceding claims, further including a rectangular metal sheet corner wave management tube for guiding the wave from the main rectangular path to the corner compensation piece.

8. An antenna according to any of the preceding claims, further including a rectangular metal sheet inline wave blocking tube for blocking the wave along the main rectangular path.

9. An antenna according to any of the preceding claims, further including a matching circuit at the exciter end to match the antenna.

10. An antenna according to any of the preceding claims, further including a matching circuit at the terminator end to match the termination.

11. An antenna according to claim 10, further including a pig tail RF cable connected to the exciter end.

12. An antenna according to any of the preceding claims, further including a ground plane below the antenna.

13. An antenna according to any of the preceding claims, further including two RF inputs to the antenna, one at one end, the other at an opposite end.
